# EUROPÄISCHE PATENTSCHRIFT

(11) **EP 3 124 661 B1**
(45) Veröffentlichungstag und Bekanntmachung des Hinweises auf die Patenterteilung: **13.03.2019**
(21) Anmeldenummer: 16181990.9
(22) Anmeldetag: 29.07.2016
(51) Int. Cl.: D02J 1/18, B21B 27/05, B29C 70/38, B29B 15/14, D04H 1/74

(54) **DYNAMISCHES AUFSPREIZEN VON ENDLOSFASERBÜNDELN WÄHREND EINES HERSTELLUNGSPROZESSES**
DYNAMIC SPREADING OF ENDLESS FIBER BUNDLES DURING A PRODUCTION PROCESS
ÉCARTEMENT DYNAMIQUE DE FAISCEAUX DE FIBRES CONTINUES PENDANT UN PROCESSUS DE FABRICATION

(30) Priorität: 31.07.2015 DE 102015010012
(43) Veröffentlichungstag der Anmeldung: 01.02.2017
(73) Patentinhaber: Airbus Defence and Space GmbH, 82024 Taufkirchen (DE)
(72) Erfinder: FINKENWERDER, Felipe, 76694 Forst (DE); GEISTBECK, Matthias, 87719 Ottobrunn (DE); GIZIK, Daniel, 80636 München (DE)
(74) Vertreter: LKGLOBAL Lorenz & Kopf PartG mbB Patentanwälte

(56) Entgegenhaltungen:
- EP-A1- 0 943 377
- EP-A2- 0 542 384
- EP-A2- 2 327 648
- US-A- 6 049 956

## Beschreibung

Die Erfindung betrifft eine Vorrichtung und ein Verfahren zum Herstellen eines faserhaltigen Produkts mit einer Führungsrolle, die dazu eingerichtet ist, ein von einer Materialspule abgespultes, um die Führungsrolle und auf ein Werkstück geleitetes Endlosfaserbündel zu führen, gemäß den Ansprüchen 1 und 6. In der Textil- und Fertigungsindustrie verwendete sogenannte Endlosfaserbündel umfassen jeweils eine Vielzahl von Einzelfasern, die keine vorbestimmte Länge aufweisen; derartige Einzelfasern werden "Endlosfasern" oder auch "Filamente" genannt. Die Fasern können dabei künstlichen oder natürlichen Ursprungs sein, insbesondere können sie beispielsweise pflanzliche oder tierische Fasern, ein oder mehrere natürliche oder künstliche Polymer(e), Glas- oder Keramikfasern oder Kombinationen daraus umfassen, um nur einige zu nennen. Beispielsweise in der Fertigung von faserverstärkten Verbundwerkstoffen werden die zugehörigen Endlosfaserbündel, die in diesem Fall insbesondere Kohlenstofffasern umfassen können, als "Rovings" bezeichnet; üblich sind hier Bündel mit zwischen 1.000 und 100.000 Einzelfasern.
Bei der Verarbeitung ist es häufig sinnvoll, die Endlosfaserbündel aufzuspreizen. So kann eine durch ein Bündel abgedeckte Fläche vergrößert und seine Dicke reduziert werden. Bei der Fertigung von Faserverbundwerkstoffen betrifft die Aufspreizung vor allem trockene Endlosfaserbündel, bei denen die Einzelfasern (anders als bei vorstabilisierten oder imprägnierten Bündeln) frei beweglich sind; die Dickenreduktion infolge der Aufspreizung erleichtert dabei zum einen ein Durchdringen von nach dem Verlegen aufgebrachten Matrixmaterial durch das Faserbündel, zum anderen wird durch sie auch das Potential vergrößert, mechanische Eigenschaften zu optimieren.
Aus dem Stand der Technik sind verschiedene Vorrichtungen zum Aufspreizen von Endlosfaserbündeln bekannt. So ist in der Druckschrift DE 198 53 192 A1 eine Vorrichtung an einer faserverarbeitenden Textilmaschine zur Führung eines Faserverbandes offenbart; die Vorrichtung umfasst ein Führungselement mit unterschiedlich geformten Bögen, durch die jeweils eine andere Spreizung verwirklicht werden kann.
Die DE 10 2007 012 607 A1 offenbart eine Spreizvorrichtung zum Aufspreizen von Endlosfaserbündeln, die mindestens eine senkrecht zur Längserstreckung eines aufzuspreizenden Bündels bewegliche Spreizkante aufweist.

Die US 6 049 956 A betrifft eine Vorrichtung zum Erzeugen einer UD-Lage aus einer vorbestimmten Anzahl von Filamentsträngen mit einer Spenderanordnung zur Ausgabe der Filamentstränge, einer Speicheranordnung zum Zwischenspeichern der Filamentstränge, einer Aufspreizanordnung und einem Ausgang.

Die EP 2 327 648 A2 betrifft ein System zum Aufspreizen eines Multifaser-Bündels. Das System besteht aus einem oder mehreren Spreizern die die Breite des Faserbündels erhöhen, insbesondere um das Bündel in mehrere Einzelbahnen zu trennen um jeweils verschiedene Faserbehandlungen durchführen zu können.

Weitere Spreizvorrichtungen sind in der EP 0 393 420 A1, der EP 1 652 978 A1, der EP 2 377 978 A1. der US 2002/ 0123819 A1, der US 6 032 342 und der WO 99/55943 A1 offenbart, wobei unterschiedliche Mechanismen zum Bewirken der Aufspreizung vorgeschlagen werden.

Auch mit den bekannten Vorrichtungen bleibt das Verlegen von aufgespreizten Endlosfaserbündeln auf Rahmen oder gekrümmten Oberflächen problematisch insbesondere insofern, als die Führung des Bündels ein durchgängig stumpfes Nebeneinanderliegen (Stoß-an-Stoß) der Abschnitte des Bündels auf einer derartigen Oberfläche oft unmöglich macht. Soll beispielsweise ein Endlosfaserbündel um ein Werkstück in Form eines Ringsegments gewickelt werden, kommt es in einem Innenbereich des Rings oft zu Überlagerungen und/oder in einem Außenbereich des Rings zu Spalten zwischen verlegten Abschnitten des Endlosfaserbündels. Darüber hinaus können beispielsweise Umlenkungen und Verschlingungen von Fasern auftreten, die zu einer Abnahme der Festigkeit eines textilen Vorformlings, Werkstoffs oder Produktes führen können.

Beispielsweise bei der Herstellung von Faserverbundwerkstoffen führt der bewusste Umgang mit dieser Problematik bei herkömmlichen Fertigungsprozessen bestenfalls zu einer Gewichtszunahme des Bauteils, die aus einer konservativen Auslegung der Bündel resultieren kann. Es kann jedoch auch zur Entstehung von Eigenspannungen bzw. Spannungsspitzen um Harzansammlungen im Laminat, zu Rissausbreitungen und anschließend zum Bauteilversagen kommen.

Die vorliegende Erfindung hat die Aufgabe, eine Technik bereitzustellen, mit der die genannten Nachteile vermieden werden können.
Diese Aufgabe wird durch eine Vorrichtung zum Herstellen eines faserhaltigen Produkts und ein Verfahren zum Herstellen eines faserhaltigen Produkts nach einem der unabhängigen Ansprüche erreicht. Bevorzugte Ausführungsformen sind in den Unteransprüchen offenbart.

Gemäß der Offenbarung ist eine Vorrichtung zum Herstellen eines faserhaltigen Produkts vorgesehen, die eine Materialspule für ein Endlosfaserbündel aufweist, oder zumindest eine Aufnahme für eine derartige Materialspule. Außerdem ist mindestens eine Führungsrolle vorgesehen, die einen um eine Drehachse rotierbaren Mantelbereich aufweist. Die Führungsrolle ist dazu eingerichtet, ein von einer Materialspule abgespultes, um den Mantelbereich der Führungsrolle geleitetes Endlosfaserbündel zu führen. Außerdem ist der Mantelbereich verformbar ausgebildet.

Gemäß der Offenbarung ist eine Vorrichtung vorgesehen, die einem Herstellen eines faserhaltigen Produkts dient. Sie weist eine Materialspule für ein Endlosfaserbündel oder zumindest eine Aufnahme für eine Materialspule auf (z.B. ein für eine Materialspule geeignetes Lager oder eine Achse, auf die eine Materialspule gesteckt werden kann). Die Vorrichtung umfasst weiterhin mindestens eine Führungsrolle für das Endlosfaserbündel oder zumindest eine Aufnahme für mindestens eine derartige Führungsrolle (z.B. ein für eine Führungsrolle geeignetes Lager oder eine Achse, auf die eine Führungsrolle gesteckt werden kann) sowie mindestens ein Mittel zum Modifizieren einer auf das Endlosfaserbündel wirkenden Zugspannung während der Herstellung des faserhaltigen Produkts. Das mindestens eine Mittel zum Modifizieren der Zugspannung umfasst dabei mindestens ein Mittel zum Ändern einer Führungsbahn zumindest eines Teils des Endlosfaserbündels.

Gemäß der Offenbarung ist auch ein Verfahren vorgesehen, das einem Herstellen eines faserhaltigen Produkts dient, beispielsweise eines textilen Vorformlings, eines Faserverbundbauteils oder eines Faserverbundhalbzeugs. Das Verfahren umfasst ein Abspulen eines Endlosfaserbündels von einer Materialspule, ein Leiten des Endlosfaserbündels um mindestens eine rotierende Führungsrolle, ein Verlegen des Endlosfaserbündels in einer ersten Bündelbreite, ein Modifizieren einer auf das Endlosfaserbündel wirkenden Zugspannung (also einer Kraft in Faserrichtung) und ein Aufbringen des Endlosfaserbündels in einer zweiten, von der ersten verschiedenen Bündelbreite. Das Modifizieren der Zugspannung umfasst dabei ein Ändern einer Führungsbahn mindestens eines Teils des Endlosfaserbündels (in dieser Schrift auch verkürzt als "Ändern der Führungsbahn" bezeichnet); insbesondere kann dabei mindestens für einen Teil der Endlosfasern die Führungsbahn (also die Bahn, entlang der die jeweilige Endlosfaser zwischen der Materialspule und einer jeweiligen Verlegeposition (z.B. auf einem Werkstück oder in einem formbildenden Werkzeug) verläuft) geändert, beispielsweise verlängert oder verkürzt werden.

Als Leiten "um die Führungsrolle" (oder auch - weiter unten - "um den Mantelbereich") ist in dieser Schrift ein Leiten des Endlosfaserbündels derart zu verstehen, dass das Endlosfaserbündel im Kontakt mit der Führungsrolle (bzw. ihres Mantelbereichs) eine Richtungsänderung erfährt; eine vollständige Umrundung der Führungsrolle (bzw. des Mantelbereichs) ist dabei nicht zwingend erforderlich. Die Führungsrolle dreht sich beim Leiten z.B. mit der Fortführung des um sie geleiteten und danach weitergeführten Endlosfaserbündels mit, wobei die Drehung aktiv durch einen Antrieb der Drehachse oder passiv durch einen Zug am Endlosfaserbündel bewirkt sein kann.

Als "Bündelbreite" wird in dieser Schrift eine (ggf. gekrümmte) Ausdehnung des Endlosfaserbündels in Richtung senkrecht zur ("endlosen") Länge der einzelnen Fasern verstanden. Die Bündelbreite ergibt sich also aus einer Anzahl an im Bündel enthaltenen Fasern und einem Grad von deren Aufspreizung. Die Änderung von der ersten zur zweiten Bündelbreite des Endlosfaserbündels ist z.B. eine Folge des Modifizierens der auf das Endlosfaserbündel wirkenden Zugspannung (das in dieser Schrift auch verkürzt als "Modifizieren der Zugspannung" oder - wenn der Zusammenhang klar ist - lediglich als "das Modifizieren" bezeichnet wird): Dieses Modifizieren führt zu einer Variation (Erhöhung oder Verringerung) der Reibungsbeiwerte und der Normalspannung zwischen Endlosfaserbündel und Führungsrolle. Dadurch ergibt sich eine Änderung der Ausbreitung der Einzelfasern auf der Oberfläche der Führungsrolle und damit die Änderung eines Aufspreizungsgrades des Endlosfaserbündels, die eine Änderung der Bündelbreite von der ersten zur zweiten Bündelbreite bedeutet.

Das Verlegen des Endlosfaserbündels kann beispielsweise auf einem Werkstück des herzustellenden Produkts (also auf dem in der Herstellung begriffenen, noch nicht fertiggestellten faserhaltigen Produkt) oder in einem formbildenden Werkzeug erfolgen.

Das Modifizieren der Zugspannung, bei dem von einer ersten Zugspannung auf eine zweite, von der ersten verschiedene Zugspannung umgestellt wird, erfolgt erfindungsgemäß im Rahmen des Herstellungsverfahrens, also dynamisch während der Fertigung eines einzelnen Produkts. Das Modifizieren kann (z.B. automatisch) insbesondere auf Grundlage einer Ansteuerung einer sich ändernden Verlegeposition des Endlosfaserbündels (also einer Position, an der das Endlosfaserbündel zu einem aktuellen Zeitpunkt verlegt wird, z.B. auf einem Vorformling oder in einem formbildenden Werkzeug), in Abhängigkeit von einem Herstellungsfortschritt erfolgen, also z.B. nach einer vorgegebenen Zeit oder nach Erreichen eines vorgegebenen Zwischenstadiums in der Herstellung des faserhaltigen Produkts und/oder in Abhängigkeit von einer erfassten Ablegespur eines bereits verlegten Abschnitts des Endlosfaserbündels.
Auf diese Weise kann der Grad der Aufspreizung des Endlosfaserbündels an die jeweilige lokale geometrische Ausprägung (z.B. verschiedene Krümmungen und/oder Profile) des herzustellenden Produkts und/oder bereits verlegte Spuren des Endlosfaserbündels angepasst werden. So können verlegungsbedingte Unregelmäßigkeiten korrigiert und eine gewünschte (z.B. gleichmäßige) Verteilung der Einzelfasern im faserhaltigen Produkt erreicht werden.
Eine erfindungsgemäße Vorrichtung ist somit dazu geeignet, ein erfindungsgemäßes Verfahren auszuführen (zumindest wenn eine geeignete Materialspule sowie eine geeignete Führungsrolle eingesetzt sind).

Die Führungsrolle stellt ein drehbar gelagertes Führungselement dar. Sie kann beispielsweise im Wesentlichen kreiszylindrisch oder auch prismenförmig ausgebildet sein. Beispielsweise weist die Führungsrolle eine Grundfläche auf, die im Wesentlichen als Kreis oder regelmäßiges Polygon ausgebildet ist; geometrisch wird die Führungsrolle beispielsweise durch Drehung der Führungsrolle um ihre Drehachse um mindestens einen Winkel, der kleiner ist als 360°, wieder auf sich selbst abgebildet.
Das Modifizieren der Zugspannung kann ein Ändern eines Drehwiderstandes der Materialspule umfassen. Eine Vorrichtung kann hierzu beispielsweise ein (z.B. automatisch regelbares) Bremsmodul für die Materialspule umfassen.

Das Ändern der Führungsbahn wird durch ein (z.B. gezieltes bzw. kontrolliertes, insbesondere steuerbares) Verformen eines Mantelbereichs der Führungsrolle realisiert, um den das Endlosfaserbündel geleitet wird; die geometrische Form des Mantelbereichs - und damit der Führungsrolle - wird dadurch also verändert.

Dabei wird der Mantelbereich (bezogen auf die Drehachse) radial nach außen gedrängt, entspannt oder nach innen gezogen, so dass also an mindestens einer Stelle ein Abstand des Mantelbereichs von der Drehachse vergrößert bzw. verkleinert wird; insbesondere kann dadurch eine Wölbung des Mantelbereichs nach außen oder innen erzeugt oder eliminiert werden. Beispielsweise wird durch ein derartiges Drängen des Mantelbereichs nach außen (bei ansonsten festbleibender Führung) eine Führungsbahn für die über den geweiteten Mantelbereich geführten Endlosfasern des Endlosfaserbündels verlängert, was bei gebremster Materialspule zu einer Erhöhung der auf das Endlosfaserbündel wirkenden Zugspannung führen kann. Dadurch kann eine Zunahme der Aufspreizung und damit der Bündelbreite bewirkt werden. Bei einer Entspannung des Mantelbereichs oder bei einer Auslenkung des Mantelbereichs radial nach innen kann die Aufspreizung analog verringert werden.

Ein solches Verformen des Mantelbereichs ist bei Verwendung einer Führungsrolle möglich: Eine derartige Führungsrolle weist einen um eine Drehachse rotierbaren Mantelbereich auf und ist dazu eingerichtet, ein von einer Materialspule abgespultes, um den Mantelbereich der Führungsrolle und auf ein Werkstück und/oder formbildendes Werkzeug geleitetes Endlosfaserbündel zu führen. Der Mantelbereich ist dabei verformbar (also reversibel in seiner geometrischen Form veränderlich) ausgebildet.
Gemäß einer Ausführungsform ist der Mantelbereich der Führungsrolle mindestens zum Teil aus einem biegsamen, flexiblen und/oder elastischen Material gebildet. Insbesondere kann der Mantelbereich aus einem Gitter oder Fachwerk aus oder zumindest mit biegsamen oder dehnbaren Stäben gebildet sein, oder aus einem durchgängigen, dehnbaren Materialschicht, z.B. aus einem polymeren Werkstoff.
Die Führungsrolle kann derart ausgebildet sein, dass die Form ihres Mantelbereichs geändert wird, wenn die Führungsrolle in (mindestens) eine Richtung parallel zu ihrer Drehachse zusammengedrückt, entspannt und/oder auseinandergezogen wird; der Mantelbereich kann sich dabei beispielsweise nach außen oder innen wölben oder aus einer gewölbten Form in eine abgeflachte übergehen.

Die Führungsrolle umfasst mindestens ein Mittel zum reversiblen bzw. mehrmaligen (bevorzugt automatischen), beispielsweise steuer- oder sogar regelbaren Verformen des Mantelbereichs.
Umfasst der Mantelbereich beispielsweise ein Gitter oder Fachwerk mit biegsamen Leisten oder Stäben wie oben beschrieben, kann durch die Aufbringung einer axial definierten Kraft eine gleichmäßige Kompression der einzelnen Leisten bzw. Stäbe und damit eine steuerbare Durchbiegung der einzelnen Stäbe erreicht werden. Analoges gilt, wenn der Mantelbereich eine durchgehende, dehnbare Materialschicht umfasst. Alternativ oder zusätzlich kann der Mantelbereich durch ein Aufbringen einer radialen Kraft geweitet oder zusammengezogen werden.
Das oder die Mittel zum Verformen des Mantelbereichs kann bzw. können beispielsweise einen Mechanismus zum Zusammendrücken, Entspannen und/oder Auseinanderziehen der Führungsrolle in axialer Richtung umfassen. Das Mittel zum Verformen des Mantelbereichs weist einen Mechanismus auf, der den Mantelbereich vom Inneren der Führungsrolle her radial weitet, zusammenzieht oder entspannt. Ein derartiges Mittel kann z.B. ein Schwellkissen im Inneren der Führungsrolle sein, das dazu eingerichtet sein kann, an eine Fluidleitung angeschlossen zu werden. Eine Fluidzufuhr bewirkt dabei beispielsweise ein Anschwellen des Schwellkissens in - bezogen auf die Drehachse der Führungsrolle - radialer Richtung und daraus resultierend eine Wölbung der Mantelfläche nach außen; ein Ablassen oder Abpumpen des Fluids bewirkt beispielsweise entsprechend eine Abflachen der Wölbung. Ein derartiges Schwellkissen kann beispielsweise als ein füllbarer Schlauch ausgebildet sein, der z.B. ringartig um die Drehachse der Führungsrolle herum angeordnet sein kann. Bei nicht durch das Innere der Führungsrolle hindurchgeführter Drehachse kann das Schwellkissen auch beispielsweise kreiszylindrisch geformt sein.
Derartige Mittel zum Verformen des Mantelbereichs ermöglichen jeweils ein automatisches, dynamisches Ändern der geometrischen Form des Mantelbereichs. Auf diese Weise kann eine Führungsbahn mindestens eines Teils des Endlosfaserbündels geändert werden. Während der Herstellung des faserhaltigen Produkts kann so die auf das Endlosfaserbündel bzw. zumindest auf einen Teil der in dem Endlosfaserbündel enthaltenen Endlosfasern wirkende Zugspannung modifiziert werden, was eine Änderung der Normalspannung an der Führungsrolle und damit des Aufspreizungsgrades des Endlosfaserbündels bewirkt.

Das Verfahren umfasst das Ändern der Form des Mantelbereichs analog ein (beispielsweise automatisch ausgeführtes) Zusammendrücken, Entspannen und/oder Auseinanderziehen der Führungsrolle, und/oder ein radiales Weiten, Zusammenziehen oder Entspannen mindestens eines Abschnitts des Mantelbereichs aus dem Inneren der Führungsrolle heraus, beispielsweise durch Aufblähen oder Abschwellenlassen eines Schwellkissens im Innern der Führungsrolle.

Die Vorrichtung umfasst eine Führungsrolle in einer der in dieser Schrift beschriebenen Ausführungsformen. Das mindestens eine Mittel zum Modifizieren der Zugspannung kann in diesem Fall beispielsweise mindestens ein Mittel zum Verformen eines Mantelbereichs der mindestens einen Führungsrolle umfassen, um den das Endlosfaserbündel geleitet wird. Insbesondere kann das mindestens eine Mittel zum Modifizieren der Zugspannung mit einem oder mehreren entsprechenden Mittel(n) der Führungsrolle zusammenwirken und so insgesamt beispielsweise ein Zusammendrücken, Auseinanderziehen oder Entspannen der mindestens einen Führungsrolle in Richtung parallel zu ihrer Drehachse bewirken. So kann das mindestens eine Mittel zum Modifizieren der Zugspannung beispielsweise eine elektrische, elektromagnetische, pneumatische und/oder mechanische Antriebseinheit zum Aufbringen einer axialen Kompressionskraft auf die Führungsrolle umfassen.
Umfasst die Führungsrolle ein Schwellkissen in ihrem Innern, kann die Vorrichtung als Mittel zum Modifizieren der Zugspannung beispielsweise einen geeigneten Fluidanschluss umfassen, der mit dem Schwellkissen verbunden ist oder werden kann und mittels dessen das Schwellkissen aufgebläht werden kann oder über den Fluid aus dem Schwellkissen abgelassen oder abgepumpt werden kann.
Gemäß einer Ausführungsform umfasst eine Vorrichtung mindestens zwei Führungsrollen bzw. Aufnahmen für Führungsrollen, die dazu eingerichtet sind, von einem Endlosfaserbündel nacheinander (mindestens teilweise) umlaufen zu werden. Das mindestens eine Mittel zum Modifizieren der Zugspannung umfasst bei einer derartigen Ausführungsform beispielsweise mindestens ein Mittel zum Ändern des Abstandes der mindestens zwei Führungsrollen. Die mindestens zwei Führungsrollen weisen beispielsweise parallele Drehachsen auf.
Durch ein derartiges Ändern des Abstandes kann auf einfache Weise die auf das Endlosfaserbündel wirkende Zugspannung wahlweise erhöht oder verringert werden und auf diese Weise ein Grad an erreichter Aufspreizung des Endlosfaserbündels während der Herstellung eines faserhaltigen Produktes z.B. an die jeweilige geometrische Form des werdenden Produkts (also des Werkstücks) angepasst und/oder Ablegefehler in bereits verlegten Bahnen des Endlosfaserbündels mindestens teilweise korrigiert werden.

Bei einer Ausführungsform des Verfahrens ist analog die mindestens eine Führungsrolle eine erste Führungsrolle, wird das Endlosfaserbündel nach oder vor der ersten Führungsrolle um eine zweite Führungsrolle geleitet, und umfasst das Modifizieren der Zugspannung ein Ändern eines Abstandes von erster und zweiter Führungsrolle.

Gemäß einer Variante einer derartigen, zwei Führungsrollen umfassenden Ausführungsform der vorliegenden Erfindung können eine oder beide Führungsrollen einen in seiner geometrischen Form veränderlichen Mantelbereich aufweisen. Das mindestens eine Mittel zum Modifizieren der Zugspannung umfasst in diesem Falle beispielsweise sowohl mindestens ein Mittel zum Verformen des Mantelbereichs der Führungsrolle(n) als auch mindestens ein Mittel zum Ändern des Abstandes zwischen den Führungsrollen. Eine derartige Ausführungsform ist besonders vorteilhaft in Fällen, bei denen ein besonders dickes Endlosfaserbündel verwendet wird (das beispielsweise 50.000 oder mehr Endlosfasern umfassen kann), das an (mindestens) einer Stelle besonders breit aufgespreizt werden soll (z.B. auf eine Breite von 40cm oder mehr); in diesem Falle ist eine größere Kraft zum vollständigen Aufspreizen erforderlich, die vorteilhaft durch Erhöhen der Zugspannung sowohl mittels Verformen einer oder beider Mantelflächen der Führungsrollen (in diesem Fall durch Auswölben der Mantelfläche(n)) als auch mittels Ändern (in diesem Fall Vergrößern) des Abstandes beider Führungsrollen aufgebracht werden kann.

Gemäß einer dieser Ausführungsformen weist lediglich die (in Durchführungsrichtung des Endlosfaserbündels gesehen) erste Führungsrolle eine Mantelfläche mit veränderlicher geometrischer Form auf; bei dieser Ausführungsform kann ebenfalls eine relativ hohe Zugspannung eingestellt werden, da aber für die zweite Führungsrolle keine Mittel zum Verformen erforderlich sind, ist eine solche Vorrichtung weniger komplex.

Gemäß einer Ausführungsform umfasst das mindestens eine Mittel zum Modifizieren der Zugspannung neben mindestens einem mechanischen Mittel (wie beispielsweise einer Antriebseinheit zum axialen Komprimieren der Führungsrolle und/oder einer Fluidzufuhr an ein Schwellkissen) eine Steuerungseinheit wie beispielsweise einen Rechner (Computer), der dazu eingerichtet sein kann, Operationen des mindestens einen mechanischen Mittels zu steuern und/oder zu regeln. Auf diese Weise kann ein optimales Verlegen Endlosfaserbündels (z.B. auf dem Werkstück) im Voraus bestimmt bzw. programmiert und dann automatisch umgesetzt werden.

Eine Ausführungsform umfasst mindestens eine Messvorrichtung zum Erfassen der Zugspannung und/oder mindestens eines die Zugspannung bestimmenden Parameters (z.B. eines Abstandes der Führungsrolle von einer zweiten Führungsrolle, eines Abstandes und/oder axialen Kompressionsgrades gegenüberliegender Grundflächen der Führungsrolle, eines Krümmungsradius des Mantelbereichs, eines maximalen Abstandes des Mantelbereichs von der Drehachse und/oder eines Fluiddrucks in einem Schwellkissen). Insbesondere kann eine derartige Messvorrichtung mindestens einen Kraftaufnehmer umfassen, beispielsweise einen Kraftaufnehmer zum Erfassen der Zugspannung und/oder einen Kraftaufnehmer zum Erfassen einer Auswölbung des Mantelbereichs der Führungsrolle. Alternativ oder zusätzlich kann die Vorrichtung mindestens eine Messvorrichtung zum Erfassen einer aktuellen Bündelbreite des Endlosfaserbündels an einer vorbestimmten Position (z.B. an der Führungsrolle und/oder - in Durchführungsrichtung des Endlosfaserbündels - hinter ihr, insbesondere an einer Verlegeposition des Endlosfaserbündes, z.B. auf einem Werkstück) umfassen. Eine derartige Messvorrichtung kann insbesondere ein optisches Messsystem umfassen.

Das mindestens eine Mittel zum Modifizieren der auf das Endlosfaserbündel wirkenden Zugspannung kann in diesem Fall dazu eingerichtet sein, die Zugspannung auf Grundlage eines so gemessenen Wertes (für die Zugspannung bzw. den mindestens einen Parameter und/oder für die gemessene aktuelle Bündelbreite) zu modifizieren. Insbesondere umfasst das mindestens eine Mittel zum Modifizieren der auf das Endlosfaserbündel wirkenden Zugspannung beispielsweise eine Regelungseinheit, die dazu eingerichtet ist, anhand eines so gemessenen Wertes (und ggf. anhand mindestens eines vorgegebenen Sollwerts) zu bestimmen, ob bzw. inwieweit bzw. in welchem Maße zum jeweiligen Zeitpunkt eine Modifikation der Zugspannung vorzunehmen ist.

In einem Beispiel kann das mindestens eine Mittel zum Modifizieren der Zugspannung eine Regelungseinheit umfassen, die insbesondere mindestens ein Regelmodul für eine Antriebseinheit zum Aufbringen einer axialen Kompressionskraft auf die Führungsrolle und/oder für eine Fluidleitung zum Einleiten oder Ablassen von Fluid in ein bzw. aus einem ggf. im Inneren der Führungsrolle vorhandenen Schwellkissen umfasst. Alternativ oder zusätzlich kann eine derartige Regelungseinheit mindestens ein Regelmodul für die Materialspule umfassen (das beispielsweise dazu eingerichtet sein kann, einen Drehwiderstand der Materialspule zu regeln).

Beispiele des Verfahrens umfassen entsprechend ein Messen mindestens eines die Zugspannung bestimmenden Parameters (z.B. mittels eines Kraftaufnehmers) und ein (beispielsweise automatisches) Modifizieren der Zugspannung (z.B. durch Ändern des mindestens einen Parameters) auf Grundlage eines gemessenen Parameterwertes; und/oder ein Messen (beispielsweise mittels eines optischen Messsystems) einer aktuellen Breite (bzw. eines Aufspreizungsgrades) des Endlosfaserbündels an einer vorbestimmten Position (z.B. ein Messen der ersten und/oder zweiten Bündelbreite) und ein Modifizieren der auf das Endlosfaserbündel wirkenden Zugspannung auf Grundlage der gemessenen Breite(n).
Auf diese Weise kann ein Aufspreizungsgrad und damit eine Bündelbreite für das Endlosfaserbündel (mit Rückkopplung) geregelt und so ein Aufbringen des Endlosfaserbündes in jeweils für die entsprechende Position optimaler Breite erreicht werden.
Das faserhaltige Produkt bzw. das Werkstück kann ein textiles Produkt sein, beispielsweise ein Gewebe, Geflecht oder Gelege.
In einem Beispiel ist vorgesehen, dass das faserhaltige Produkt ein Halbzeug (Vorformling) oder Endprodukt eines Faserverbundwerkstoffs ist; in diesem Fall umfasst das Endlosfaserbündel z.B. Kohlenstofffasern.
Beispielsweise im Zusammenhang mit der Herstellung eines Faserverbundwerkstoffs kann in einem Beispiel des Verfahrens insbesondere bei Anwendung einer Wickel- und/oder Flechttechnik, einer automatisierten Schichtlegung und/oder einer Trockenfaserpositionierung ausgeführt werden, und eine Führungsrolle bzw. eine Vorrichtung gemäß Anspruch 1 können jeweils Teil einer Anlage für eine derartige Anwendung sein. Insbesondere kann eine Führungsrolle vorteilhaft in einen Legekopf einer Anlage zur automatisierten Schichtlegung, einer Anlage zur Trockenfaserpositionierung und/oder einer Wickel- oder Flechtanlage zur Herstellung eines Faserverbundwerkstoffs oder eines Faserverbundhalbzeugs integriert sein. Die vorliegende Erfindung bietet somit ein breites Anwendungsfeld.
Das Endlosfaserbündel kann trocken sein oder auch vorstabilisiert oder vorimprägniert; in den letztgenannten Fällen umfasst ein erfindungsgemäßes Verfahren beispielsweise ein Erwärmen des Endlosfaserbündels. Dadurch kann die Viskosität eines in dem Endlosfaserbündel enthaltenen (z.B. polymeren) Binders oder Matrixmaterials gesenkt werden. Die Vorrichtung kann dem entsprechend eine Wärmequelle zum Erwärmen des Endlosfaserbündels umfassen.

Die vorliegende Offenbarung bietet insbesondere den Vorteil, dass ein Endlosfaserbündel in verschiedenen Bündelbreiten verlegt werden kann, die an die Form des herzustellenden faserhaltigen Produkts angepasst werden können. Auf diese Weise können unerwünschte Überlagerungen, Spalten, Umlenkungen und Verschlingungen von Fasern vermieden oder zumindest gering gehalten werden. So können textile Fehler reduziert und ein Flächengewicht sowie eine Faserdichte bzw. ein Faservolumengehalt in einem herzustellenden faserhaltigen Produkt optimiert werden. Insbesondere können der Materialverbrauch sowie die Fertigungszeit für das herzustellende faserhaltige Produkt reduziert sowie günstige Leichtbaukennzahlen erzielt werden.
Dabei können eine das Verfahren ausführende Vorrichtung bzw. eine Vorrichtung und eine Führungsrolle in einfacher, leichter und kompakter Bauweise hergestellt werden, wodurch sie vorteilhaft in verschiedenste Anlagen integriert werden können.
Gemäß einem Aspekt wird eine Vorrichtung mit einer Führungsrolle für die Herstellung eines faserhaltigen Produkts bereitgestellt, wodurch ein Verfahren ermöglicht wird, welches erlaubt, die von einem Endlosfaserbündel abgedeckte Fläche während des Ablegevorgangs variabel zu gestalten. Bei komplexeren Geometrien ist es von Vorteil durch einen unterschiedlichen Grad der Aufspreizung der Fasern eine optimale Abdeckung über die Geometrie des Kerns zu gewährleisten. Hierfür wird die Führungsbahn beim Abspulen über eine beispielsweise drehbar gelagerte Führungsrolle durch eine Verformung des Mantelbereichs und einem Ändern der Zugspannung der jeweiligen Oberfläche angepasst, wodurch das Bündel in der gewünschten Breite sowie Dicke abgelegt werden kann. Die Führungsbahn ist die Bahn, entlang der die Endlosfasern zwischen der Materialspule und einer jeweiligen Verlegeposition verlaufen. Die Verformung des Mantelbereichs kann hierbei durch verschiedene Mechanismen erzeugt werden. So kann die Verformung beispielsweise durch Anlegen einer (Druck- oder Zug-) Kraft entlang zur Drehachse der Führungsrolle und der daraus resultierenden Wölbung des biegsamen Mantelbereichs geschaffen werden. Die Verformung kann weiterhin auch aus dem Inneren des Mantelbereichs, beispielsweise in Form eines Schwellkissens, z.B. pneumatisches Druckkissen, erzeugt werden. Durch Messvorrichtungen der jeweiligen Prozessparameter wird somit ein automatisches dynamisches Ändern der Mantelgeometrie und damit einhergehend eine optimale Abdeckung beim Verlegen auf die Zielgeometrie ermöglicht.

Im Folgenden werden bevorzugte Ausführungsbeispiele der Erfindung anhand einiger Zeichnungen näher erläutert. Es versteht sich, dass die schematisch dargestellten einzelnen Elemente und Komponenten auch anders kombiniert und/oder ausgebildet sein können als gezeigt und dass die vorliegende Erfindung nicht auf die gezeigten Ausführungsvarianten beschränkt ist.
Es zeigen schematisch:
- Figur 1a, 1b: eine Führungsrolle mit unterschiedlich geformtem Mantelbereich und ein Faserbündel;
- Figur 2: eine alternative Ausführungsform einer Führungsrolle mit Faserbündel; und
- Figur 3: eine beispielhafte Vorrichtung im Gebrauch.

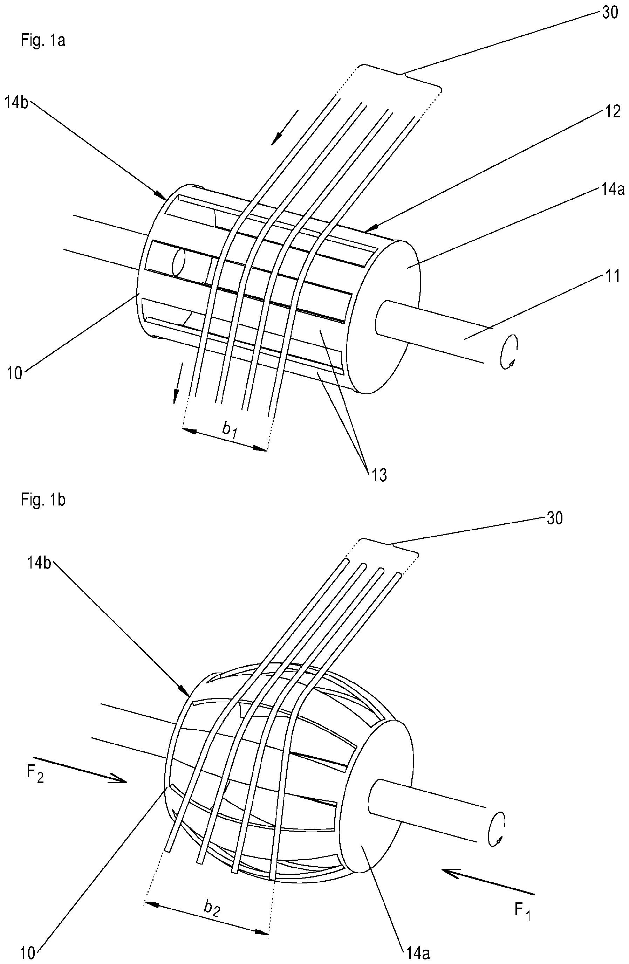

In Figur 1a ist eine Ausführungsform einer Führungsrolle 10 in einem ersten Zustand gezeigt. Die Führungsrolle weist eine Drehachse 11 und einen Mantelbereich 12 auf, um den ein schematisch dargestelltes Faserbündel 30 geleitet wird; zur Vereinfachung der Figur sind dabei lediglich vier Endlosfasern des Faserbündels 30 dargestellt; es versteht sich, dass die vorliegende Offenbarung nicht auf ein derartiges Bündel beschränkt ist, sondern im Allgemeinen eine Verwendung von Endlosfaserbündeln mit einer Vielzahl, beispielsweise mehreren tausend einzelnen Endlosfasern betrifft.
Die gezeigte Führungsrolle 10 weist im Wesentlichen kreisförmige Grundflächen 14a, 14b auf, die durch - im vorliegenden Beispiel acht - sich in Richtung der Drehachse 11 erstreckende, flexible und gleichmäßig um die Grundflächen herum angeordnete Stäbe 13 verbunden sind. Eine Drehung der Führungsrolle 10 um 45° bildet daher diese geometrisch auf sich selbst ab.
Die Stäbe 13 können beispielsweise einen nachgiebigen Kunststoff, Verbundwerkstoff und/oder ein Metall einer Dicke umfassen, die die Flexibilität ermöglicht. Bevorzugt ist eine Ausführungsform, bei der die Stäbe 13 mindestens teilweise aus Metall bestehen und sich ihre Flexibilität aus einer geringen Dicke ergibt.
Im dargestellten Beispiel weisen die Stäbe einen rechteckigen Querschnitt auf und sind parallel zueinander angeordnet; alternativ können die Stäbe beispielsweise einen kreisförmigen oder sonstigen Querschnitt haben, und/oder sie könnten schräg zueinander oder sogar miteinander verschränkt angeordnet sein.

Das Endlosfaserbündel 30 wird gemäß der Darstellung in Pfeilrichtung von rechts oben nach links unten geleitet; die rotierbare Führungsrolle dreht sich dabei entsprechend mit. In Leitungsrichtung hinter der Führungsrolle weist das Endlosfaserbündel 30 in dem in der Figur 1a gezeigten Zeitpunkt eine Bündelbreite b₁ auf (die in Richtung senkrecht zur ("endlosen") Länge der einzelnen Fasern gemessen wird).

Der Mantelbereich der Führungsrolle 10 ist verformbar ausgebildet; dies ist an einem Vergleich der Figuren 1a und 1b zu erkennen, die die Führungsrolle zu verschiedenen Zeitpunkten zeigen. Gegenüber dem in der Figur 1a gezeigten Zeitpunkt sind die Grundflächen 14a, 14b der Führungsrolle 10 in der Figur 1b durch Aufbringung von in axialer Richtung entgegengesetzt wirkenden Kompressionskräften F₁, F₂ zusammengedrückt; alternativ könnte eine der Grundflächen fixiert und lediglich von der anderen Seite her eine Kompressionskraft in axialer Richtung aufgebracht werden.

Als Folge des Zusammendrückens biegen sich in der in Figur 1b gezeigten Situation die flexiblen Stäbe 13 radial nach außen; der Mantelbereich 12 bildet so eine entsprechende Außenwölbung aus, und in einem (axial gesehen) mittleren Bereich weist die Führungsrolle gegenüber dem in der Figur 1a gezeigten Zeitpunkt einen vergrößerten Umlaufradius auf. Die Führungsbahn des Faserbündels 30 zwischen einer nicht gezeigten Materialspule und einem nicht gezeigten Werkstück eines herzustellenden Produkts, auf das das Faserbündel aufgebracht wird, wurde somit geändert; bei geeigneter sonstiger (nicht gezeigter) Führung des Endlosfaserbündels ergab sich aus den dargestellten Krümmungen im vorliegenden Beispiel eine Verlängerung der Führungsbahn gegenüber der in Figur 1a gezeigten Situation.

Bei ausreichend großem Drehwiderstand der Materialspule wird bereits durch die Verlängerung der Führungsbahn eine auf das Endlosfaserbündel 30 wirkende Zugspannung erhöht; andernfalls wird der Drehwiderstand beispielsweise zusätzlich entsprechend vergrößert. Die Erhöhung der Zugspannung bewirkt eine vergrößerte Normalspannung des Endlosfaserbündels 30 an dem Mantelbereich 12 der Führungsrolle 10, was ein Ausbreiten der Endlosfasern auf dem gewölbten Mantelbereich und damit ein Aufspreizen des Endlosfaserbündels 30 zur Folge hat: Wie in der Figur 1b gezeigt ist, weist das Endlosfaserbündel, nachdem es um den ausgewölbten Mantelbereich geleitet wurde, eine von der Bündelbreite b₁ verschiedene Bündelbreite b₂ auf. Diese Bündelbreite ist beispielsweise an einer Position auf dem Werkstück des herzustellenden Produkts, an der der entsprechende Abschnitt des Endlosfaserbündels zum in der Figur 1b gezeigten Zeitpunkt aufgebracht wird, vorteilhafter als die Bündelbreite b₁ (was z.B. in einer lokalen Ausprägung des Werkstücks, beispielsweise einer Krümmung oder einem Profil begründet sein kann).
Bei einer (nicht gezeigten, beispielsweise später erfolgenden) Zurücknahme der Kompressionskräfte F₁, F₂ drücken die flexiblen Stäbe 13 die Grundflächen 14a, 14b beispielsweise (wieder) auseinander, was ein Abflachen der Wölbung des Mantelbereichs 12 und damit eine Verringerung des Aufspreizungsgrades, also der Bündelbreite zur Folge hat.
Bei einem nicht gezeigten Beispiel ist ein Mittel zum Verformen des Mantelbereichs vorgesehen, wobei das Mittel einen Mechanismus aufweist, mit dem die Führungsrolle in Richtung parallel zu ihrer Drehachse 11, 21 zusammengedrückt, auseinandergezogen oder entspannt werden kann.
Bei einem weitern, ebenfalls nicht gezeigten Beispiel weist das zum Verformen des Mantelbereichs einen Mechanismus auf, mit dem mindestens ein Abschnitt des Mantelbereichs aus dem Inneren der Führungsrolle 20 heraus radial geweitet, zusammengezogen oder entspannt werden kann.

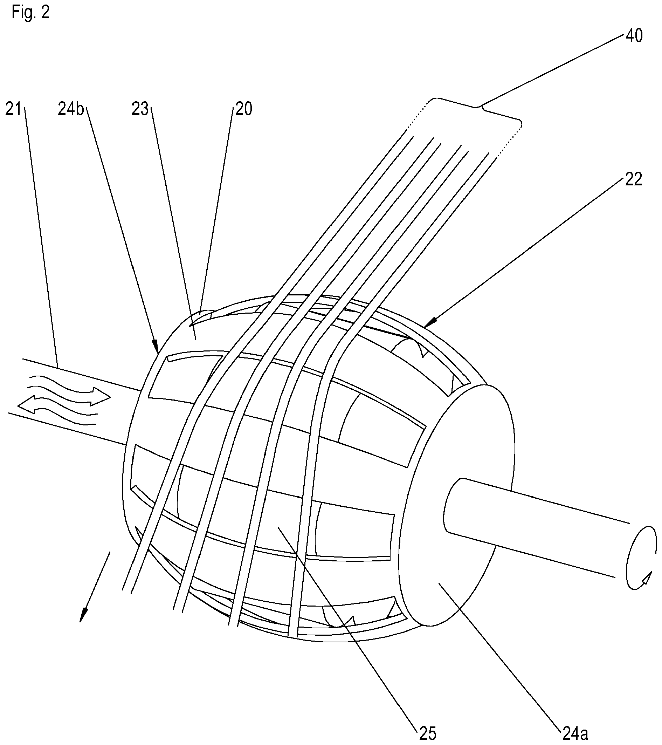

In Figur 2 ist eine alternative Ausführungsform einer Führungsrolle 20 in einer Situation dargestellt, in der ein um die Führungsrolle geleitetes Endlosfaserbündel ähnlich der in der Figur 1b gezeigten Situation aufgespreizt wird. Die Führungsrolle 20 ist ähnlich zur in Figur 1a, 1b gezeigten Führungsrolle 10 aufgebaut: Insbesondere weist sie eine Drehachse 21 und zwei im Wesentlichen kreisförmige Grundflächen 24a, 24b auf, die durch sich in Richtung der Drehachse 21 erstreckende, flexible und gleichmäßig um die Grundflächen herum angeordnete Stäbe 23 verbunden sind. Die Stäbe spannen einen Mantelbereich 22 auf, um den ein Endlosfaserbündel geleitet wird und der in der dargestellten Situation nach außen gewölbt ist.
Anders als die Führungsrolle 10 weist die in Figur 2 gezeigte Führungsrolle 20 in ihrem Inneren als Mittel zum Verformen des Mantelbereichs 22 ein Schwellkissen 25 mit einer Fluidleitung durch das Innere der Drehachse 21 auf. In der dargestellten Situation ist das Schwellkissen 25 aufgebläht, was durch Einpumpen eines Fluids (beispielsweise Luft oder Wasser) in das Schwellkissen bewirkt wurde; dadurch wurde der aus den flexiblen Stäben 23 gebildete Mantelbereich verformt, nämlich radial nach außen gewölbt.
Die Auswirkung der Verformung des Mantelbereichs auf das Endlosfaserbündel 40, insbesondere auf seine Aufspreizung entspricht der Auswirkung, die mit Bezug auf die Figur 1b und die dort dargestellte, alternative Führungsrolle 10 bereits oben beschrieben wurde.
Bei einem (nicht gezeigten) Ablassen oder Abpumpen des Fluids durch die Zuleitung im Innern der Drehachse nimmt die Wölbung des Mantelbereichs (wieder) ab, und es stellt sich eine Aufspreizung analog zur in Figur 1a gezeigten, die alternative Führungsrolle 10 betreffenden Situation ein.

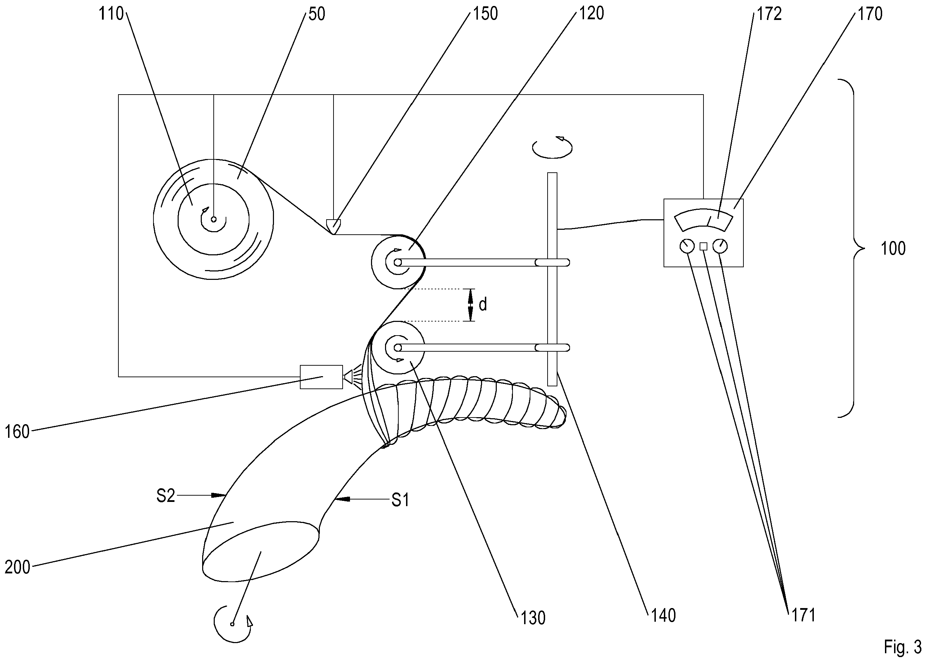

In Figur 3 ist schematisch eine beispielhafte Vorrichtung 100 im Gebrauch, nämlich während einer Herstellung eines faserhaltigen Produktes dargestellt. Die Vorrichtung 100 wickelt dabei ein Endlosfaserbündel 50 um ein rotierendes Werkstück 200 des faserhaltigen Produktes (also um das in der Herstellung begriffene, noch nicht fertiggestellte faserhaltige Produkt). Das Werkstück 200 weist dabei eine Krümmung auf, die an der Seite S₁ stärker ist als an der Seite S₂. Bei einem Aufbringen des Endlosfaserbündels in konstanter Bündelbreite würden daher an der Seite S₁ Überlagerungen und/oder an der Seite S₂ Spalte zwischen verlegten Abschnitten des Endlosfaserbündels auftreten. Dies kann mittels der vorliegenden Offenbarung vermieden werden. Die Vorrichtung 100 umfasst eine Materialspule 110, von der das Endlosfaserbündel 50 abgespult wird und die beispielsweise einen einstellbaren Drehwiderstand aufweist. Die Vorrichtung 100 umfasst weiterhin zwei drehbar gelagerte Führungsrollen 120, 130, um die nacheinander das Endlosfaserbündel 50 geleitet wird. Die Vorrichtung 100 weist ferner Mittel zum Modifizieren einer auf das Endlosfaserbündel wirkenden Zugspannung während der Herstellung des faserhaltigen Produkts auf: Im in der Figur 3 gezeigten Beispiel umfasst dieses Mittel einen Mechanismus 140, mit dem der Abstand d zwischen den Führungsrollen 120, 130 während der Herstellung des faserhaltigen Produkts verändert werden kann, wobei für die Modifikation der Zugspannung ggf. zusätzlich der Drehwiderstand der Materialspule angepasst wird; es versteht sich, dass die Änderung des Abstandes alternativ oder zusätzlich durch Umpositionierung einer der Führungsrollen in eine andere Richtung erfolgen könnte als dargestellt.
Gemäß einer bevorzugten Ausführungsform der Vorrichtung 100 ist eine oder beide Führungsrollen mit verformbarem Mantelbereich ausgebildet; es kann zusätzlich zur Änderung des Abstandes d eine Änderung des jeweiligen Mantelbereichs oder beider Mantelbereiche zum Modifizieren der Zugspannung eingesetzt werden.

Die Modifikation der Zugspannung bewirkt eine Änderung der Reibung des Endlosfaserbündels an den Führungsrollen, was - wie bereits beschrieben - an bzw. (in Führungsrichtung) hinter den Führungsrollen eine Änderung des Aufspreizungsgrades, also der Bündelbreite zur Folge hat. Auf diese Weise die Bündelbreite während der Herstellung eines faserhaltigen Produkts dynamisch eingestellt werden. So kann zum Beispiel bei Verlegung eines Faserbündelabschnitts auf einer ersten Seite S₁ des Werkstücks 200 des faserhaltigen Produkts jeweils eine kleinere Bündelbreite eingestellt werden und bei Verlegung eines Faserbündelabschnitts auf einer zweiten Seite S₂ eine größere Bündelbreite. Insbesondere kann das Endlosfaserbündel so beispielsweise mindestens annähernd überlappungs- und spaltfrei auf dem Werkstück 200 des faserhaltigen Produkts aufgebracht werden.

Die gezeigte beispielhafte Vorrichtung 100 umfasst weiterhin eine Messvorrichtung 150 (beispielsweise einen Kraftaufnehmer) zum Erfassen einer auf das Endlosfaserbündel wirkenden Zugspannung sowie eine Messvorrichtung 160 (beispielsweise ein optisches Messsystem) zum Erfassen einer aktuellen Breite des Endlosfaserbündels an einer vorbestimmten Position, vorliegend an einer Stelle, an der das Endlosfaserbündel beide Führungsrollen 120, 130 passiert hat. Die Messvorrichtungen und die Materialspule 110 sind an eine Regelungseinheit 170 angeschlossen, mit welcher der Abstand d zwischen den Führungsrollen 120, 130 sowie gegebenenfalls ein Drehwiderstand der Materialspule 110 auf Grundlage der erfassten Werte eingestellt werden kann. Damit kann die Vorrichtung die verschiedenen Schritte automatisch vornehmen.

Die gezeigte Regelungseinheit 170 umfasst ferner Eingabemittel 171 und eine Anzeige 170 als Ausgabemittel, über die ein Anwender Vorgaben einstellen und die Herstellung kontrollieren kann.

In einem Beispiel ist für das Verfahren vorgesehen, dass das Verformen des Mantelbereichs umfasst: ein Zusammendrücken, ein Auseinanderziehen oder ein Entspannen der mindestens einen Führungsrolle in Richtung parallel zu ihrer Drehachse; und/oder ein radiales Weiten, Zusammenziehen oder Entspannen mindestens eines Abschnitts des Mantelbereichs aus dem Inneren der Führungsrolle heraus.

In einem Beispiel ist für das Verfahren vorgesehen, dass die mindestens eine Führungsrolle eine erste Führungsrolle ist und das Endlosfaserbündel nach oder vor der ersten Führungsrolle um eine zweite Führungsrolle geleitet wird, und wobei das Ändern der Führungsbahn ein Ändern eines Abstandes zwischen der ersten und der zweiten Führungsrolle umfasst.

### Bezugszeichen

- 10, 20: Führungsrolle
- 11, 21: Drehachse
- 12, 22: Mantelbereich
- 13, 23: Stäbe
- 14a, 14b, 24a, 24b: Grundflächen
- 25: Schwellkissen

- 30, 40, 50: Endlosfaserbündel

- 100: Vorrichtung
- 110: Materialspule
- 120, 130: Führungsrolle
- 140: Mechanismus zum Verändern eines Abstandes
- 150: Messvorrichtung zum Erfassen einer Zugspannung
- 160: Messvorrichtung zum Erfassen einer Bündelbreite
- 170: Regelungseinheit
- 171: Eingabemittel der Regelungseinheit
- 172: Ausgabemittel der Regelungseinheit

- 200: Werkstück eines herzustellenden faserhaltigen Produkts

- b₁, b₂: Bündelbreite
- d: Abstand zwischen Führungsrollen
- F₁, F₂: Kompressionskraft
- S₁, S₂: Seiten des Werkstücks

## Patentansprüche

1. Eine Vorrichtung zum Herstellen eines faserhaltigen Produkts, aufweisend:
- eine Materialspule (110) für ein Endlosfaserbündel (30, 40, 50) oder zumindest eine Aufnahme für eine derartige Materialspule; und
- mindestens eine Führungsrolle (10, 20, 120, 130) mit einem um eine Drehachse (11, 21) rotierbaren Mantelbereich (12, 22),
wobei die Führungsrolle dazu eingerichtet ist, das von der Materialspule (110) abgespulte, um den Mantelbereich der Führungsrolle geleitete Endlosfaserbündel (30, 40, 50) zu führen, und
wobei der Mantelbereich (12, 22) verformbar ausgebildet ist,
wobei die Führungsrolle mindestens ein Mittel zum Verformen des Mantelbereichs aufweist,
wobei das Mittel zum Verformen des Mantelbereichs einen Mechanismus aufweist, mit dem mindestens ein Abschnitt des Mantelbereichs aus dem Inneren der Führungsrolle (20) heraus radial weitbar, zusammenziehbar oder entspannbar ist.

2. Vorrichtung gemäß Anspruch 1, wobei das Mittel zum Verformen des Mantelbereichs einen Mechanismus aufweist, mit dem die Führungsrolle in Richtung parallel zu ihrer Drehachse (11, 21) zusammendrückbar, auseinanderziehbar oder entspannbar ist.

3. Vorrichtung gemäß Anspruch 1 oder 2, wobei vorgesehen ist:
i) mindestens eine Messvorrichtung zum Erfassen mindestens eines, die geometrische Form des Mantelbereichs bestimmenden Parameterwertes, und/oder
ii) mindestens eine Messvorrichtung (160) zum Erfassen einer aktuellen Breite des Endlosfaserbündels an einer vorbestimmten Position; und/oder
iii) eine Messvorrichtung (150) zum Erfassen einer auf das Endlosfaserbündel wirkenden Zugspannung, und
wobei wenigstens ein Mittel zum Regeln (170) der auf das Endlosfaserbündel wirkenden Zugspannung auf Grundlage eines oder mehrerer mit der mindestens einen Messvorrichtung erfassten/erfasster Parameterwerte/s vorgesehen ist.

4. Vorrichtung gemäß Anspruch 1, 2 oder 3, wobei mindestens zwei Führungsrollen (120, 130) mit veränderlichem Abstand (d) oder zumindest Aufnahmen für zwei derartige Führungsrollen vorgesehen sind, die in einer Führungsrichtung des Endlosfaserbündels hintereinander angeordnet sind; und wobei wenigstens ein Mittel (140) zum Ändern des Abstandes der mindestens zwei Führungsrollen vorgesehen ist.

5. Vorrichtung gemäß einem der vorhergehenden Ansprüche, wobei das Mittel zum Verformen des Mantelbereichs ein Mittel zum Modifizieren der Zugspannung ist; und
wobei das Mittel zum Verformen des Mantelbereichs ein Mittel zum Modifizieren der Führungsbahn ist.

6. Ein Verfahren zum Herstellen eines faserhaltigen Produkts, wobei das Verfahren umfasst:
- ein Abspulen eines Endlosfaserbündels (30, 40, 50) von einer Materialspule (110);
- ein Leiten des Endlosfaserbündels um mindestens eine Führungsrolle (10, 20, 120, 130);
- ein Verlegen des Endlosfaserbündels in einer ersten Bündelbreite (b₁);
- ein Modifizieren einer auf das Endlosfaserbündel (30, 40, 50) wirkenden Zugspannung, das ein Ändern einer Führungsbahn mindestens eines Teils des Endlosfaserbündels (30, 40, 50) umfasst; und
- ein Verlegen des Endlosfaserbündels in einer zweiten, von der ersten verschiedenen Bündelbreite (b₂).
wobei das Ändern der Führungsbahn ein Verformen eines Mantelbereichs (12, 22) der mindestens einen Führungsrolle (10, 20, 120, 130) umfasst, um den das Endlosfaserbündel geleitet wird und durch ein Mittel zum Verformen des Mantelbereichs erfolgt, wobei das Mittel zum Verformen des Mantels einen Mechanismus aufweist, mit dem mindestens ein Abschnitt des Mantelbereichs aus dem Inneren der Führungsrolle (20) heraus radial weitbar, zusammenziehbar oder entspannbar ist.

7. Verfahren gemäß Anspruch 6, das ferner aufweist:
- ein Messen mindestens eines, die geometrische Form des Mantelbereichs bestimmenden Parameters, wobei das Verformen des Mantelbereichs (12, 22) auf Grundlage eines gemessenen Parameterwertes erfolgt; und/oder
- ein Messen einer Breite (b₁, b₂) des Endlosfaserbündels an einer vorbestimmten Position und/oder ein Messen der auf das Endlosfaserbündel wirkenden Zugspannung umfasst, wobei das Modifizieren der Zugspannung auf Grundlage der gemessenen Breite bzw. Zugspannung erfolgt.

## Claims

1. A device for producing a fibre-containing product, comprising:
- a material reel (110) for an endless fibre bundle (30, 40, 50) or at least a holder for such a material reel; and
- at least one guide roller (10, 20, 120, 130) with a shell region (12, 22) that is rotatable about an axis of rotation (11, 21),
wherein the guide roller is designed to guide the endless fibre bundle (30, 40, 50) unreeled from the material reel (110) and passed around the shell region of the guide roller, and
wherein the shell region (12, 22) is of a deformable design,
wherein the guide roller has at least one means for deforming the shell region,
wherein the means for deforming the shell region has a mechanism with which at least a portion of the shell region can be radially extended from the interior of the guide roller (20), pulled together or relaxed.

2. Device according to Claim 1, wherein the means for deforming the shell region has a mechanism with which the guide roller can be pushed together, pulled apart or relaxed in a direction parallel to its axis of rotation (11, 21).

3. Device according to Claim 1 or 2, wherein there is provided:
i) at least one measuring device for recording at least one parameter value determining the geometrical shape of the shell region, and/or
ii) at least one measuring device (160) for recording a current width of the endless fibre bundle at a predetermined position; and/or
iii) a measuring device (150) for recording a tensile stress acting on the endless fibre bundle, and
wherein at least one means for controlling (170) the tensile stress acting on the endless fibre bundle on the basis of one or more parameter values recorded with the at least one measuring device is provided.

4. Device according to Claim 1, 2 or 3, wherein at least two guide rollers (120, 130) with a variable spacing (d) or at least holders for two such guide rollers are provided, arranged one behind the other in a guiding direction of the endless fibre bundle; and wherein at least one means (140) for changing the spacing of the at least two guide rollers is provided.

5. Device according to one of the preceding claims, wherein the means for deforming the shell region is a means for modifying the tensile stress; and
wherein the means for deforming the shell region is a means for modifying the guide path.

6. A method for producing a fibre-containing product, wherein the method comprises:
- an unreeling of an endless fibre bundle (30, 40, 50) from a material reel (110);
- a passing of the endless fibre bundle around at least one guide roller (10, 20, 120, 130);
- a laying of the endless fibre bundle in a first bundle width (b₁);
- a modifying of a tensile stress acting on the endless fibre bundle (30, 40, 50), which comprises a changing of a guide path of at least part of the endless fibre bundle (30, 40, 50); and
- a laying of the endless fibre bundle in a second bundle width (b₂) that is different from the first bundle width;
wherein the changing of the guide path comprises a deforming of a shell region (12, 22) of the at least one guide roller (10, 20, 120, 130) around which the endless fibre bundle is passed and is performed by means for deforming the shell region, wherein the means for deforming the shell has a mechanism with which at least a portion of the shell region can be radially extended from the interior of the guide roller (20), pulled together or relaxed.

7. Method according to Claim 6, which also comprises:
- a measuring of at least one parameter determining the geometrical shape of the shell region, wherein the deforming of the shell region (12, 22) is performed on the basis of a measured parameter value; and/or
- a measuring of a width (b₁, b₂) of the endless fibre bundle at a predetermined position and/or a measuring of the tensile stress acting on the endless fibre bundle, wherein the modifying of the tensile stress is performed on the basis of the measured width or tensile stress.

## Revendications

1. Dispositif de fabrication d'un produit fibreux, comportant :
- une bobine de matériau (110) destinée à un faisceau de fibres sans fin (30, 40, 50) ou au moins un réceptacle destiné à une telle bobine de matériau ; et
- au moins un rouleau de guidage (10, 20, 120, 130) comportant une région d'enveloppe (12, 22) pouvant être mise en rotation autour d'un axe de rotation (11, 21), dans lequel le rouleau de guidage est conçu pour guider le faisceau de fibres sans fin (30, 40, 50) déroulé de la bobine de matériau (110) et guidé autour de la région d'enveloppe du rouleau de guidage, et
dans lequel la région d'enveloppe (12, 22) est réalisée de manière déformable,
dans lequel le rouleau de guidage comporte au moins un moyen destiné à déformer la région d'enveloppe,
dans lequel le moyen destiné à déformer la région d'enveloppe comprend un mécanisme par lequel au moins une partie de la région d'enveloppe peut être dilatée, contractée ou détendue radialement depuis l'intérieur du rouleau de guidage (20).

2. Dispositif selon la revendication 1, dans lequel le moyen de déformation de la région d'enveloppe comporte un mécanisme par lequel le rouleau de guidage peut se contracter, se dilater ou se détendre dans une direction parallèle à son axe de rotation (11, 21).

3. Dispositif selon la revendication 1 ou 2, dans lequel il est prévu :
i) au moins un dispositif de mesure destiné à détecter au moins une valeur de paramètre déterminant la forme géométrique de la région d'enveloppe ; et/ou
ii) au moins un dispositif de mesure (160) destiné à détecter une largeur actuelle du faisceau de fibres sans fin à une position prédéterminée ; et/ou
iii) un dispositif de mesure (150) destiné à détecter une contrainte de traction agissant sur le faisceau de fibres sans fin, et
dans lequel il est prévu au moins un moyen destiné à réguler (170) la contrainte de traction agissant sur le faisceau de fibres sans fin sur la base d'une ou de plusieurs valeur(s) de paramètres détectée(s) par ledit au moins un dispositif de mesure.

4. Dispositif selon la revendication 1, 2 ou 3, dans lequel il est prévu au moins deux rouleaux de guidage (120, 130) présentant un espacement variable (d) ou au moins des logements destinés à deux rouleaux de guidage de ce type qui sont disposés l'un derrière l'autre dans une direction de guidage du faisceau de fibres sans fin ; et dans lequel il est prévu au moins un moyen (140) destiné à modifier l'espacement desdits au moins deux rouleaux de guidage.

5. Dispositif selon l'une des revendications précédentes, dans lequel le moyen destiné à déformer la région d'enveloppe est un moyen destiné à modifier la contrainte de traction ; et
dans lequel le moyen destiné à déformer la région d'enveloppe est un moyen destiné à modifier le trajet de guidage.

6. Procédé de fabrication d'un produit fibreux, le procédé comprenant :
- le déroulement d'un faisceau de fibres sans fin (30, 40, 50) d'une bobine de matériau (110) ;
- le guidage du faisceau de fibres sans fin autour d'au moins un rouleau de guidage (10, 20, 120, 130);
- la mise en place du faisceau de fibres sans fin dans une première largeur de faisceau (b₁);
- la modification d'une contrainte de traction agissant sur le faisceau de fibres sans fin (30, 40, 50), cela comprenant une modification d'un trajet de guidage d'au moins une partie du faisceau de fibres sans fin (30, 40, 50) ; et
- la mise en place du faisceau de fibres sans fin dans une deuxième largeur de faisceau (b₂) différente de la première,
dans lequel la modification du trajet de guidage comprend la déformation d'une région d'enveloppe (12, 22) d'au moins un rouleau de guidage (10, 20, 120, 130) autour duquel le faisceau de fibres sans fin est guidé, et est effectuée par un moyen destiné à déformer la région d'enveloppe, dans lequel le moyen destiné à déformer l'enveloppe comprend un mécanisme par lequel au moins une partie de la région d'enveloppe peut se dilater radialement, se contracter ou se détendre à partir de l'intérieur du rouleau de guidage (20).

7. Procédé selon la revendication 6, comprenant en outre :
- une mesure d'au moins un paramètre déterminant la forme géométrique de la région d'enveloppe,
dans lequel la déformation de la région d'enveloppe (12, 22) est effectuée sur la base d'une valeur de paramètre mesurée ; et/ou
- une mesure d'une largeur (bi, b₂) du faisceau de fibres sans fin à une position prédéterminée et/ou la mesure de la contrainte de traction agissant sur le faisceau de fibres sans fin, dans lequel la modification de la contrainte de traction est effectuée sur la base de la largeur ou de la contrainte de traction mesurée.
